# EUROPEAN PATENT APPLICATION

(11) **EP 1 234 653 A1**
(43) Date of publication of application: **28.08.2002**
(21) Application number: 01500180.3
(22) Date of filing: 11.07.2001
(51) Int. Cl.: B29C 49/74, B29C 49/42

(54) **Device for cutting the domes of bottles**

(30) Priority: 23.02.2001 ES 200100427
(71) Applicant: Vidal Caupena, Ernesto, 17452 Massanes (Girona) (ES)
(72) Inventor: The designation of the inventor has not yet been filed
(74) Representative: Ponti Sales, Adelaida

(57) **Abstract**

It comprises means for advancing the bottles towards a station (10) for cutting the domes of the bottle (11), said cutting station (10) being associated with means for pressing the bottle (11) against the cutting element (12) of said station (10) and with means for making the bottle (11) rotate, said pressure and said rotation means being a pair of drive pulleys (1), and it is characterized in that it also includes means (13a, 13b) for limiting the rotation of the bottles (11), in such a way that rotation of the bottles (11) occurs only when the bottles are situated substantially opposite the cutting station (10).

It permits to use the device with bottles of different cross section.

## Description

This invention relates to a device for cutting the domes of bottles, allowing use thereof with bottles of different cross section.

### BACKGROUND OF THE INVENTION

When they emerge from the mould, bottles or receptacles obtained by blowing of thermoplastic material have a dome on their upper end through which air had been injected into the bottle or receptacle during the blowing process. Once the bottle or receptacle has been made this dome must be removed in order to leave the mouth of the bottle or receptacle exposed.

Known in the art are cutting devices that move the bottle in a straight line to a cutting station, which comprises a curved blade and a rotating plate whose edge has an outline complementary to that of the neck of the bottle. This plate lightly compresses the bottle against the blade, obliging it to advance and rotate about itself at the same time during the operation of cutting the dome.

This type of device has the drawback that the bottles frequently fall before reaching the blade zone, thereby causing a delay in the process and reducing the output of the device.

The device described in Spanish patent P93006540, by the same holder as this application, was designed to solve this drawback. This patent describes a mechanism for cutting the superfluous dome of bottles or receptacles obtained by blowing of thermoplastic materials.

The mechanism comprises means for advancing the bottles towards a cutting zone in which is situated a blade against which the bottles are pressed. As the bottles advance in front of the blade, a rotation movement about their own axis is transmitted to them in order to achieve cutting and removal of the upper dome. This mechanism also includes two drive pulleys situated facing the blade, which rest on the upper part of the bottles and push against the cutting edge of the blade, while at the same time transmitting a rotation movement to them during cutting of their upper part.

The main drawback of this mechanism is that, while it is suitable for bottles of circular cross section, if the bottles have a different cross section, such as an oval or rectangular one, the position of the bottles upon exit from the machine cannot be controlled, which is a serious disadvantage in automation of the cutting process.

Moreover, the mechanism described in this patent also presents the drawback that a pair of pulleys is necessary for each bottle whose dome has to be cut, so that the output obtained with the mechanism is reduced.

### DESCRIPTION OF THE INVENTION

The cutting device of the invention manages to solve the aforesaid drawbacks, while presenting other advantages which will be described below.

The device of this invention for cutting the domes of bottles of blown plastic materials comprises means for advance of the bottles towards a station for cutting the dome of the bottle, said cutting station being associated with means for pressing the bottle against the cutting element of said station and with means for making the bottle rotate, said pressure and said rotation means being a pair of drive pulleys, and it is characterized in that it also includes means for limiting the rotation of the bottles, in such a way that rotation of the bottles occurs only when the bottles are situated substantially opposite the cutting station.

Thanks to this feature it is possible to use the device of the invention with bottles of different cross sections, so that all the bottles emerge from the machine in the correct position and the station achieves high output.

According to a preferred embodiment of this invention, said means of limiting the rotation of the bottles comprise a pair of sectors situated one on either side of the path followed by the bottles, forming a channel whose width coincides with the smaller dimension of the cross section of the bottles throughout their entire path, preventing rotation of the bottles except in the zone situated substantially opposite the cutting station, in which the width of the channel will be at least the same as the larger dimension of the cross section of the bottles, permitting rotation of the bottles.

Preferably, the length of the cutting zone is double the diameter of the head of the bottles. It has been shown in practice that this length is particularly advantageous, since it allows the dome of the bottle to be cut completely and for the latter to emerge from the machine always in the same position.

Advantageously, each drive pulley is in contact with two bottles, one leading bottle and one following bottle, thereby doubling productivity when compared with the mechanism described in the patent cited previously.

### BRIEF DESCRIPTION OF THE DRAWINGS

For a better understanding of all that has been set out herein, some drawings are attached which show, schematically and only by way of non-restrictive example, a practical case of embodiment of the cutting device of this invention.
Figure 1 is an elevation view of the cutting device of this invention, showing the cutting station;
Figure 2 is a plan view of the cutting device of this invention partially sectioned; and

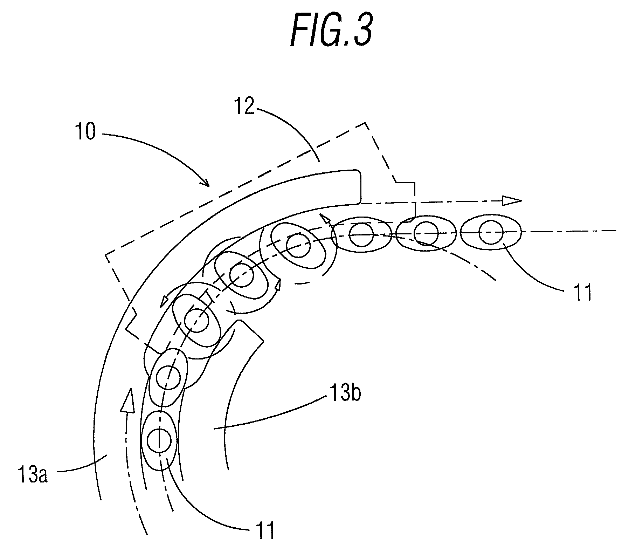

Figure 3 is a plan view of one part of the device of this invention, in which the means of limiting rotation of the bottles may be seen.

### DESCRIPTION OF A PREFERRED EMBODIMENT

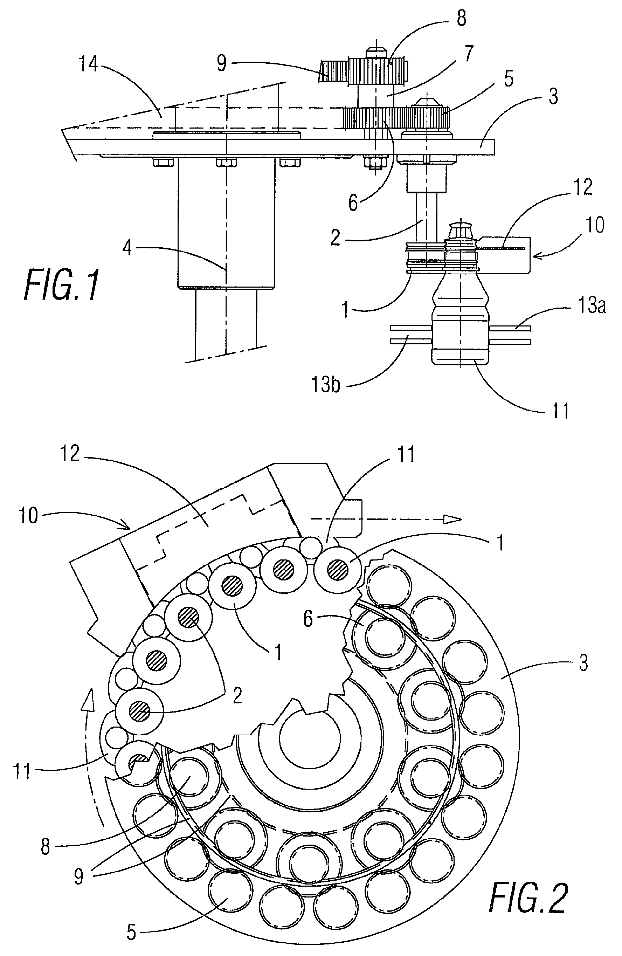

As may be seen from Figures 1 and 2, the device of this invention comprises a plurality of drive pulleys 1 associated with spindles 2 mounted on a rotating plate 3. Said drive pulleys 1 are mounted equidistant from the rotating spindle 4 of said rotating plate 3.

Said spindles 2 are attached to pinions 5, with each pair of said pinions 5 meshing into a toothed gearwheel 6 mounted onto a spindle 7 attached to the rotating plate 3. Each spindle 7 is in turn attached to a pinion 8 which meshes with a rack 9 or with a belt.

The toothed wheel 6 can also mesh with a crown wheel or toothed wheel 14 (drawn in dotted line). The traction of the mechanism through the crown wheel 14 in place of the rack 9 is implemented in cases in which high asepsis is required.

The device of this invention also includes a cutting station, indicated in general by reference number 10, through which all the bottles 11 pass one after the other for cutting their domes when they come into contact with the blade 12.

According to the invention, the device includes means for limiting rotation of the bottles 11, so that they rotate only when they pass in front of the cutting station 10.

This limitation of rotation is implemented by means of a pair of sectors 13a, 13b situated one on either side of the path followed by the bottles 11. These sectors define a channel of a width equal to the smaller dimension of the cross section of the bottles 11, except in the zone situated substantially facing the cutting station 10, thus preventing rotation of the bottles 11 in this zone of the channel.

In the zone situated substantially facing the cutting station 10, the width of the channel is at least equal to the larger dimension of the cross section of the bottles 11. In this zone, therefore, the bottles 11 can rotate thanks to the rotation of the drive pulleys 1. It has been found suitable for the length of the cutting zone to be equal to double the diameter of the head of the bottles 11.

As may be seen from Figure 2, each drive pulley 1 is in contact with two bottles 11, one in front and the other following behind.

In the device of this invention, cutting of the domes of the bottles 11 is implemented as follows: When a bottle 11 leaves the lower-width zone of the channel formed by the sectors 13a and 13b, the bottle 11 begins to rotate under the action of the drive pulleys 1. At the same time, the drive pulleys press the bottle 11 against the blade 12, making possible cutting of the dome of the bottle 11 by continuing to rotate on their spindle facing the cutting zone.

Once the bottle 11 ceases to be in contact with the blade 12, the bottle 11 emerges tangentially from the device of this invention. Thanks to limitation of the rotation of the bottles 11, the latter emerge placed in the same position, thus facilitating automation of the cutting process. Furthermore, the cutting device itself can be used to cut the domes of bottles of different cross sections.

Despite the fact that reference has been made to one specific embodiment of the invention, it will be obvious to a person skilled in the art that the cutting device described allows of many variations and modifications, and that all the details mentioned can be replaced by others that are technically equivalent, without departing from the scope of protection defined by the attached claims.

## Claims

1. Device for cutting domes of bottles (11) of blown plastic materials, which comprises means for advancing the bottles towards a station (10) for cutting the domes of the bottle (11), said cutting station (10) being associated with means for pressing the bottle (11) against the cutting element (12) of said station (10) and with means for making the bottle (11) rotate, said pressure and said rotation means being a pair of drive pulleys (1) , **characterized in that** it also includes means (13a, 13b) for limiting the rotation of the bottles (11), in such a way that rotation of the bottles (11) occurs only when the bottles are situated substantially opposite the cutting station (10).

2. Device as claimed in Claim 1, **characterized in that** said means of limiting the rotation of the bottles (11) comprise a pair of sectors (13a, 13b) situated one on either side of the path followed by the bottles (11), forming a channel whose width coincides with the smaller dimension of the cross section of the bottles (11) throughout their entire path, preventing rotation of the bottles (11) except in the zone situated substantially opposite the cutting station (10), in which the width of the channel will be at least the same as the larger dimension of the cross section of the bottles (11), permitting rotation of the bottles.

3. Device as claimed in Claim 2, **characterized in that** the length of the cutting zone is double the diameter of the head of the bottles (11).

4. Device as claimed in Claim 1, **characterized in that** each drive pulley (1) is in contact with two bottles (11), one leading bottle and one following bottle.
